# EUROPEAN PATENT SPECIFICATION

(11) **EP 3 340 443 B1**
(45) Date of publication and mention of the grant of the patent: **02.09.2020**
(21) Application number: 16206220.2
(22) Date of filing: 22.12.2016
(51) Int. Cl.: H02K 11/026, H02K 11/33, H02K 5/14

(54) **BRUSH-HOLDER FOR AN ELECTRIC MACHINE**
BÜRSTENHALTER FÜR EINE ELEKTRISCHE MASCHINE
PORTE-BALAI POUR UNE MACHINE ÉLECTRIQUE

(43) Date of publication of application: 27.06.2018
(73) Proprietor: Mahle International GmbH, 70376 Stuttgart (DE)
(72) Inventor: COTAR MLAKAR, Janko, 5294 Dornberk (SI); GRAPULIN, Oton, 5250 Solkan (SI)
(74) Representative: BRP Renaud & Partner mbB Rechtsanwälte Patentanwälte Steuerberater

(56) References cited:
- EP-A1- 1 058 369
- WO-A2-2013/054023
- CN-U- 204 597 190
- US-A1- 2013 009 498
- US-B1- 6 291 913

## Description

The present invention relates to a brush-holder for an electric machine according to the preamble of claim 1, such as, for example, an electric motor or a generator, or a motor-generator. The invention also relates to an electric machine which is equipped with a brush-holder of this type. Finally, the invention relates to a method for manufacturing a brush-holder of this type.

In a direct-contact electric machine, the function of a brush-holder is providing electrically contact with rotor windings of the machine by means of corresponding contact elements, the "brushes". Customarily, a brush-holder of this type is provided with a housing having a brush support for the accommodation of at least one brush, wherein the function of the brush is providing the electrical contact with the rotor windings of the machine. In an electric machine, which is operating and/or is formed as an electric motor, the electrical contact via the brushes is called commutation. In an electric machine, which is operating and/or is formed as a generator, e.g. an alternator or lighting dynamo, the electrical contact via the brushes is called excitation.

Moreover, the housing also serves for the accommodation of electric and/or electronic units such as, for example, EMC units, in the interests of improving the electromagnetic compatibility of the machine. EMC stands for "Electromagnetic Compatibility". A further unit which is accommodated in the housing is customarily an ECU component for the electrical or electronic control of the machine. ECU stands for "Electronic Control Unit". This is customarily a microcontroller, which functions as a control device, and is configured as a control circuit accordingly.

A problem in brush-holders of this type is posed by a complex manufacture, which involves a plurality of separate production steps, frequently requiring different assembly stations, between which the brush-holder must be transferred.

From US 2007/0206363 A1, an electronics holder for a generator or a lighting dynamo is known, having a housing in which an ECU component and a number of EMC units are accommodated. To this end, the housing is provided with a full-thickness housing cut-out, which is configured such that the ECU component can be inserted into the cut-out from one side, whereas the EMC units can be inserted into the cut-out from the other side. The housing is provided with printed conductors, which are exposed in the cut-out in order to permit electrical contact with the units inserted. The ECU component has a number of ECU contacts, which are welded to corresponding printed conductors. For the EMC units, plug-in contacts are configured on the printed conductors, with which the corresponding EMC contacts of the individual EMC units engage, and are thus electrically connected. For the fitting of the ECU component, the known electronics holder must be turned to one side and, for the fitting of the EMC units, must be turned to the other side, thus requiring a number of process steps. In addition, the EMC units must be inserted individually, thereby requiring the corresponding process steps and expenditure of time.

A brush-holder of the generic type is known from US 2013/0 009 498 A1 and has a housing, having a brush support for supporting of at least one brush for electrically contacting of rotor windings of the machine, wherein the housing is provided, on an installation side, with a recess for the accommodation of electric and/or electronic units, wherein these units are inserted into the recess from the installation side, such that they can be electrically bonded from the installation side, wherein a first such unit is formed by an EMC circuit for the improvement of electromagnetic compatibility, having a printed circuit board, on which at least one EMC unit is arranged, and having a plurality of mutually parallel and adjacently arranged EMC contacts, wherein the recess has an EMC region for the fitting of the printed circuit board, wherein a second such unit is constituted by an ECU component for the control of the machine, having a plurality of electrical ECU contacts in a mutually parallel and adjoining arrangement, wherein at least one of the ECU contacts is electrically connected to one of the EMC contacts, and wherein the recess has an ECU region for the fitting of the ECU component. At the known brush-holder the housing is provided with conducting rails or traces forming a conductor frame. At least one of such conducting traces is electrically connected firstly to one of the EMC contacts by wire bonding and secondly to one of the ECU contacts by wire bonding. Each wire bonding needs two bracing spots for connecting the respective wire to the respective trace and to the respective contact. Contact points of the conductor rails or traces are exposed at least in the brush support and in the recess.

EP 1 058 369 A1 discloses a housing which is provided with at least one conductor rail. The respective rail is routed in the housing and has a free surface adjacent to an ECU component. Said ECU component is electrically connected to said rail by wire bolding.

The present invention addresses the issue of disclosing an improved form of embodiment of a brush-holder of the aforementioned type, or of an electric machine equipped therewith, or of an associated method for the manufacture thereof, which is specifically characterized by a reduction of manufacturing costs. According to the invention, this issue is resolved by the subject of the independent claims 1 and 10. Advantageous forms of embodiment are described in the dependent claims. The invention is set out in the appended set of claims.

The invention is based upon the general concept of a brush-holder, the housing of which has a brush support for the accommodation of at least one brush adapted for providing electrical contact with rotor windings of the machine, wherein the housing is provided with a recess for the accommodation of a plurality of separate, electric and/or electronic units, and is configured such that these units can be inserted into the recess and electrically bonded from the same side. As a consequence of this design, the housing does not need to be turned for the fitting of units thereto, as the fitting of units and the electrical connecting of said units can be executed from the same side. Specifically, the units can be arranged in the recess, such that the electrical connecting of units can then proceed if all the units are already in place in the recess. Consequently, it is not necessary to first insert the first units, which are then electrically bonded, then to insert the second units, which are then electrically bonded, thus requiring a total of four steps. The brush-holder according to the invention can be completed in two process steps, namely, the insertion of the first and second units, and thereafter the connection of the first and second units.

According to the invention, a first such unit is formed by an EMC circuit for the improvement of electromagnetic compatibility. The EMC circuit has a printed circuit board, on which at least one EMC unit is arranged. Moreover, the printed circuit board can be configured with a plurality of parallel and adjacently-arranged EMC contacts, which are electrically contacted with the respective EMC units in an appropriate manner. In the preferred case, the entire EMC circuit is formed by the printed circuit board, with components fitted. Measures for the improvement of electromagnetic compatibility customarily involve a number of EMC units. Appropriate EMC units include, for example, a capacitor, a varistor, a diode and a resistor. Preferably, all these EMC units are arranged on the printed circuit board to form the EMC circuit. By this arrangement, the EMC circuit can be prefabricated separately on the printed circuit board, then inserted into the housing in an exceptionally simple and cost-effective manner. For example, the EMC circuit comprises a total of three or four EMC units, which are attached to the printed circuit board such that, ultimately, only one component, namely the printed circuit board, needs to be inserted into the recess in the housing. Moreover, the standard production of electric terminals on a printed circuit board is far simpler and more cost-effective than in the case of separate units in the housing, which is generally of plastic construction. For example, EMC units can be electrically connected to the printed circuit board in a soldering kiln. Preferably, all EMC units are arranged on the same side of the printed circuit board (PCB). For a higher number of EMC units it is also possible to arrange the EMC units on both sides of the printed circuit board, i.e. some EMC units are arranged on the one side of the PCB and the other EMC units are arranged on the other side of the PCB.

In order to further improve the accommodation of the EMC circuit in the housing, according to the invention, the recess is equipped with an EMC region, which is configured for the fitting of the printed circuit board. Specifically, the EMC region can be configured as a plug-in station, which permits a positive positioning of the printed circuit board in the recess.

In an advantageous further development, the printed circuit board is formed of a ceramic substrate. Preferably, an aluminium-based substrate such as, for example, aluminium oxide, preferably Al₂O₃, is used for this purpose. Printed conductors for the electrical bonding of the EMC contacts and the respective EMC units, for example, can be printed onto this substrate, thereby permitting the exceptionally cost-effective production of the printed circuit board. Appropriate printing techniques include, for example, thick film printing. Any burn-in of the printed conductors optionally required can be executed relatively simply on a ceramic substrate, even at higher temperatures.

In a particularly advantageous further development, the respective EMC unit is configured as a SMD component. SMD stands for "Surface Mounted Device". Conversely to conventional components, a SMD component is not provided with electrical terminals which stand proud of the component, for the purposes of electrical contacting, but only with corresponding electrical contact surfaces. Accordingly, the respective SMD component is electrically bonded directly to the respective printed conductor, for example by means of a soldered joint. By the use of a ceramic substrate, soldered joints can be formed on the printed circuit board. Appropriately, the soldering temperature is lower than the burn-in temperature of the printed conductors.

Overall, the standard production of an EMC circuit, in conjunction with a ceramic printed circuit board with printed conductors printed thereon and with SMD-EMC components, can be exceptionally simply and cost-effectively achieved.

According to the invention, a second such unit is constituted by an ECU component for the electrical control of the machine. This ECU component has a plurality of electrical ECU contacts in a mutually parallel and adjoining arrangement. At least one of these ECU contacts is electrically connected to one of the EMC contacts, in order to achieve the desired improvement of electromagnetic compatibility. Appropriately, the recess can have an ECU region, which is designed for the fitting of the ECU component. Here again, the ECU region can be appropriately provide a plug-in station for the positive positioning of the ECU component.

According to the invention all EMC contacts are arranged in axial alignment opposite one of the ECU contacts. The EMC contacts form an EMC contact rank on the printed circuit board, in which all the EMC contacts are configured in a mutually parallel and adjoining arrangement. The ECU contacts form an ECU contact rank on the ECU component, in which all the ECU contacts are configured in a mutually parallel and adjoining arrangement. The EMC contact rank and the ECU contact rank are arranged in opposition on a common plane, such that the EMC contacts run parallel to the ECU contacts. All the EMC contacts are arranged in axial alignment with one of the ECU contacts respectively. The number of EMC contacts is customarily smaller than the number of ECU contacts. This arrangement simplifies the production of electric terminals for the units after the insertion of the units into the recess. In special embodiments the number of EMC contacts can also be equal than the number of ECU contact. It is also possible to have two different printed circuits on the two sides of the PCB, each comprising at least one EMC unit.

According to the invention, at least one of the EMC contacts in the EMC region is electrically connected to a conductor rail which is routed in the housing, and is arranged in axial alignment opposite one of the ECU contacts, which is also electrically connected to this conductor rail in the ECU region. This means that a conductor rail of this type is electrically connected at one end to one of the EMC contacts, and at the other end to one of the ECU contacts, such the respective EMC contact is also electrically bonded to the respective ECU contact, via the indirect connection formed by this printed conductor.

If, as described heretofore, the EMC terminal rank and the ECU terminal rank are appropriately arranged in mutual opposition on a common plane, the respective printed conductor is routed in a contact region which is provided for electrical contacting with the respective EMC contact and the respective ECU contact, which is parallel to said plane and parallel to the contacts which are bonded thereto. This measure also simplifies automated production.

The brush-holder can also be equipped with a RFI component for the reduction of radio frequency interference, having RFI contacts. RFI stands for "Radio Frequency Interference".

In a first variant, the RFI component can also be inserted in the recess, thereby constituting a third such unit. In this case, the recess is provided with a RFI region for the fitting of the RFI component. To this end, for example, the RFI component can constitute a plug-in station for the positive positioning of the RFI component. In a second variant, a separate component support for the RFI component can be configured on the housing, independently of the recess and which, specifically, does not need to be accessible from the installation side. It is also conceivable that the RFI component can be moulded into the plastic of the housing. The RFI component can here be electrically bonded with corresponding conductor rails, which are routed in the housing, before the plastic moulding of the housing is applied. If, in accordance with the first variant, the RFI component constitutes a third unit, the RFI contacts are connected to the conductor rails in the RFI region. Regardless of whether the first variant or the second variant is executed, at least one EMC contact and/or at least one ECU contact is electrically connected to a conductor rail which is routed to the RFI component.

The conductor rails form a conductor frame, which is enclosed in the plastic moulding of the housing, such that the contact points of the conductor rails, at least in the brush support and in the recess, are exposed, i.e. are not covered by plastic. On the brush-holder, these conductor rails can also constitute exposed electric terminal points, i.e. which are not enclosed in the plastic moulding, for example for earthing or grounding, or for the routing of current to a current-consuming electric machine, e.g. an electric motor, or for the tapping of current from a current-generating electric machine, e.g. a generator. Likewise, terminal points for a phase signal and for a lighting tap can be provided. According to the aforementioned second variant, the RFI component can be integrated in this conductor frame, and be likewise enclosed in the plastic moulding of the housing. It is also possible to integrate the RFI component by welding or soldering the RFI component to metal terminals of the conductor frame and by moulding the plastic housing over the arrangement consisting of the conductor frame and the component welded or soldered thereto.

In another form of embodiment, the ECU component can be provided with a plastic body, from which extend the ECU contacts, and with a metal plate which is solidly bonded to the plastic body and which projects above the plastic body on a side facing away from the ECU contacts, where it bears on a shoulder which is configured in the ECU region. A configuration of this type for the ECU component is described as a "multi-leaded power package". The metal plate permits the evacuation of heat, which is generated in the ECU component during operation. According to a further development, a heat sink can be arranged on the housing, such that it is extensively in contact with the metal plate of the ECU component. By means of the heat sink, the heat of the ECU component delivered to the metal plate can be absorbed and evacuated, in order to prevent an overheating of the ECU component. The heat sink is generally a metal component, which can discharge heat into the environment in the form of thermal radiation. The heat sink is thus arranged on the housing, such that it is in direct contact with this environment. The heat sink can thus be configured with or without cooling ribs.

In a further advantageous form of embodiment, the recess is enclosed by a cover which is fitted to the installation side. All the units are protected from impurities accordingly. In an advantageous form of embodiment, the cover can constitute the aforementioned heat sink. In other words, the cover is configured as a metal component and is designed such that, in the installed state, it is extensively in contact with the metal plate of the ECU component. The cover thus assumes a dual function.

Appropriately, the recess configured on the installation side is closed on a side of the housing facing away from the installation side. In other words, the recess does not constitute a through-opening which penetrates the housing. This design simplifies the fitting of the brush-holder and the manufacture of the housing.

According to the invention, the respective electrical connection is constituted by a soldered joint or by a welded joint, which is specifically formed by resistance spot welding. This bonding method can be executed by a standard mechanical process. The recess, or the arrangement of units accommodated therein, is designed such that bonding techniques of this type can be automatically executed by means of an appropriate machine.

An electric machine according to the invention, which can be an electric motor and/or a generator, comprises a stator, a rotor and a brush-holder of the aforementioned type, which is secured to the stator, adapted to provide electrical contact with rotor windings of the rotor. Preferably, the machine is a lighting dynamo, i.e. alternator, for a combustion engine in a motor vehicle. The machine can also be a starter for a combustion engine in a motor vehicle. In state-of-the-art vehicles, a starter-generator can be employed, i.e. an electric machine which can operate as an electric motor and as a generator.

In a method according to the invention for manufacturing a brush-holder of the aforementioned type, the housing is firstly mounted into an assembly station, such that the installation side is facing upwards. The electric and/or electronic units can then be inserted into the recess, from the installation side. Electrical connections, e.g. by soldering or welding, can then be formed from the installation side, with the housing still located in the assembly station. The recess can then be closed by means of a cover. The housing, with the closed recess, can then be removed from the assembly station. Evidently, this manufacturing method requires no transfer of the housing between a plurality of assembly stations and/or no rotation of the housing. Moreover, only two steps are required for the insertion of units into the recess and for the formation of connections of the units in the recess.

Further important characteristics and advantages of the invention proceed from the sub-claims, from the drawings, and from the associated description of the figures provided with reference to the drawings.

It is understood that both the aforementioned characteristics and those described hereinafter can not only be applied in the respective combination indicated, but also in further combinations or in isolation, without departing from the scope of the present invention.

Preferred exemplary embodiments of the invention are represented in the drawings and described in greater detail in the description hereinafter, wherein the same reference figures refer to equivalent, similar or functionally equivalent units.

Herein, schematically in each case,
- Fig. 1: shows an isometric view of an electric machine with a brush-holder,
- Fig. 2: shows an isometric view according to Fig. 1, but with part of the machine housing removed in the region of the brush-holder,
- Fig. 3: shows an isometric view of the brush-holder in a first form of embodiment, but with no electrical and/or electronic units in a recess of the brush-holder,
- Fig. 4: shows a view according to Fig. 3, but with units fitted in the recess,
- Fig. 5: shows an isometric view of an EMC circuit,
- Fig. 6: shows an isometric view of the brush-holder in a second form of embodiment, with an open recess in a housing of the brush-holder,
- Fig. 7: shows an isometric view of the brush-holder according to Fig. 6, but from a different viewing direction, wherein the recess is closed by a cover,
- Fig. 8: shows a view according to Fig. 7 in which, however, the plastic of the housing, the units accommodated in the recess and the cover have been omitted.

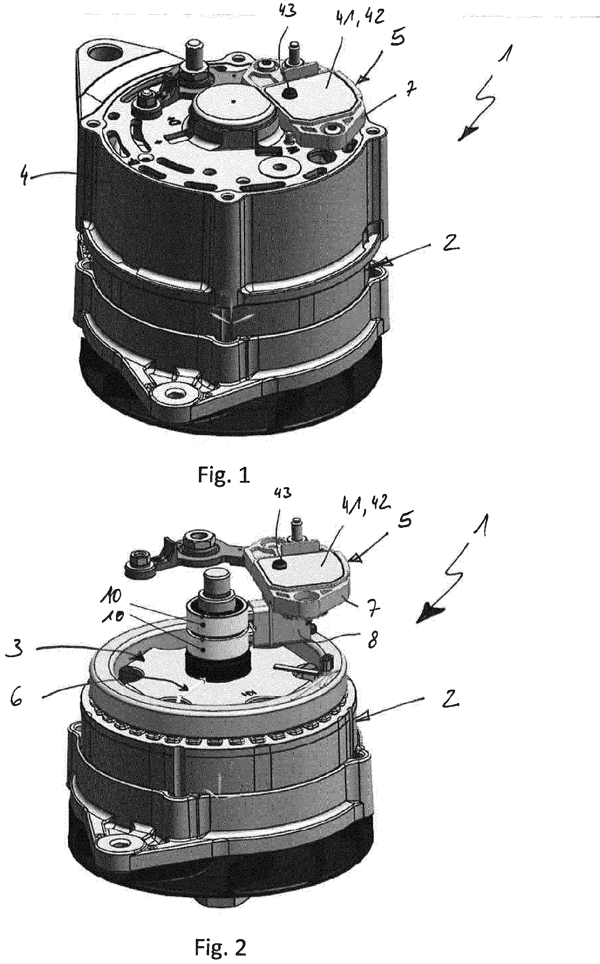

According to Figs. 1 and 2 an electric machine 1, preferably a generator, and specifically a lighting dynamo, which can however also be configured as an electric motor, and preferably also as a starter-generator, comprises an external stator 2 and an internal rotor 3. In Fig. 1, the rotor 3 is covered by a housing section 4 of the machine 1, which is omitted in Fig. 2. The housing section 4 is solidly bonded to the stator 2. Moreover, a brush-holder 5 is secured to the housing section 4. By means of the housing section 4, the brush-holder 5 is thus also secured to the stator 2. The function of the brush-holder 5 is electrically contacting of rotor windings 6 of the rotor 3, of which, however, only a feeder can be seen in Fig. 2.

According to Figs. 1 to 4, 6 and 7, the brush-holder 5 comprises a housing 7, on which a brush support 8 is configured. The brush support 8 accommodates two brushes 9 for electrically contacting of the rotor windings 6. According to Fig. 2 corresponding slip rings 10 can be arranged on the rotor 3 for this purpose, with which one brush 9 respectively is in contact.

On an installation side 11, the housing 7 has a recess 12 for the accommodation of electrical and/or electronic units 13. These units 13 can thus be inserted into the recess 12 from the installation side 11, such that they are also electrically connectable from said installation side 11.

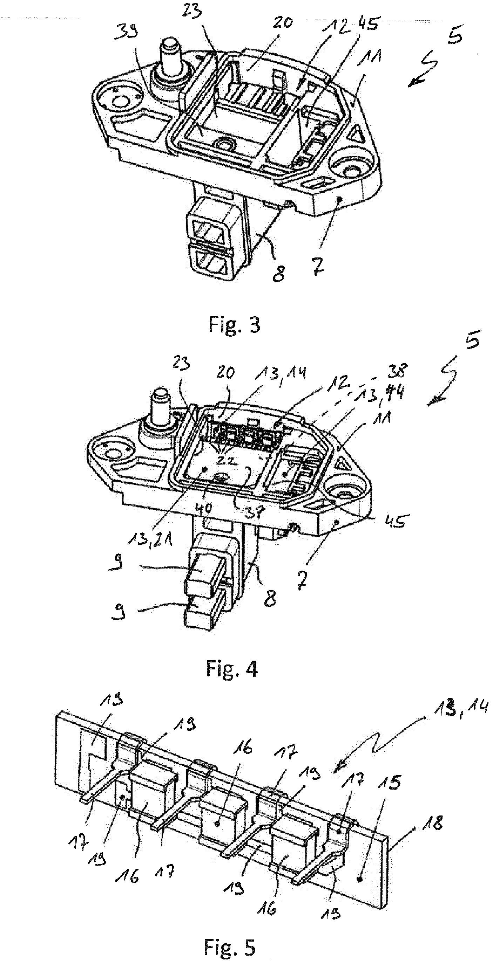

A first such unit 13 is formed by an EMC circuit 14, which improves the electromagnetic compatibility of the machine 1. According to Fig. 5, the EMC circuit 14 has a printed circuit board 15, upon which a plurality of EMC units 16 and a plurality of electrical EMC contacts 17 are arranged. The EMC contacts 17 are configured in a mutually parallel and adjoining arrangement. In the example represented, for exemplary purposes only, exactly four such EMC contacts 17 are provided. Appropriately, the printed circuit board 15 is formed of a ceramic substrate 18 which is produced, for example, from an aluminium-based material. Printed conductors 19 are printed onto the substrate 18, for example by means of thick film printing. By means of the printed conductors 19, the EMC contacts 17 and the EMC units 16 are electrically mutually contacted, or interconnected to constitute the EMC circuit 14. In the example shown in Fig. 5, each of the EMC units 16 is configured as a SMD component, such that they are directly electrically connected to the respective printed conductor 19, for example by means of soldered joints. According to Figs. 3, 4 and 6, an EMC region 20 is configured in the recess 12, into which the printed circuit board 15 can be positively inserted.

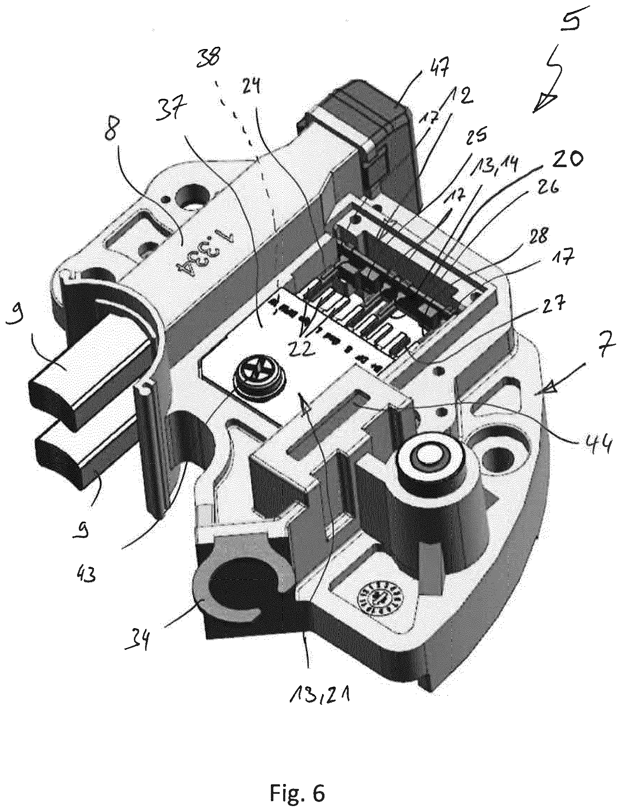

A second such unit 13 can be constituted by an ECU component 21, which can be seen in Figs. 4 and 6. The function of the ECU component 21 is the electrical control of the machine 1, and it has a plurality of electrical ECU contacts 22, which are configured in a mutually parallel and adjoining arrangement. In the example shown, exactly eight such ECU terminals 22 are provided on the ECU component 21. At least one of these ECU contacts 22 is electrically connected to one of the EMC contacts 17. In the example represented here, each EMC contact 17 is electrically connected to exactly one ECU contact 22. The recess 12 incorporates an ECU region 23, which is designed for the insertion of the ECU component 21, and which specifically permits a positive positioning of the ECU component 21 in the recess 12.

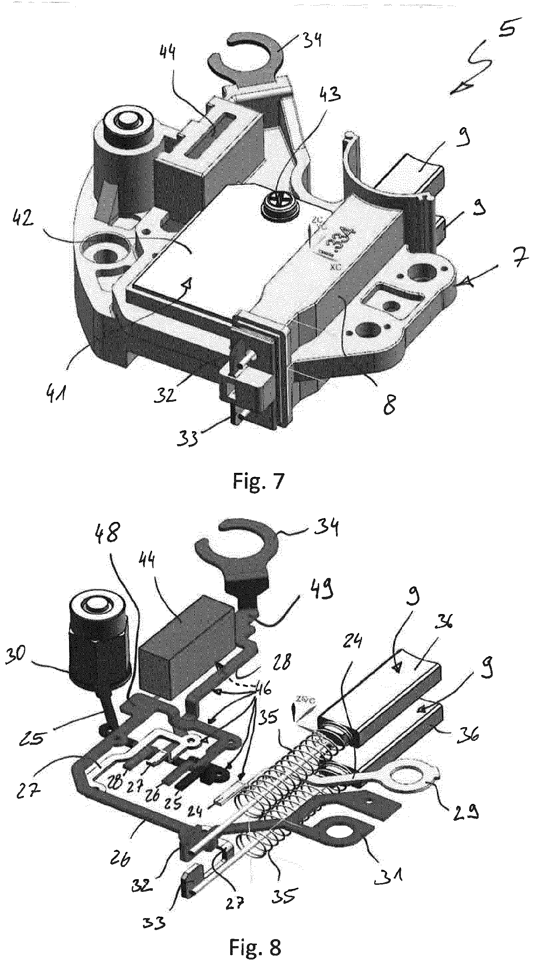

As can be seen most clearly from Fig. 6, each of the EMC contacts 17 is axially aligned with one of the ECU contacts 22 respectively, and is arranged in opposition thereto in the recess 12. According to Fig. 6, each of the four EMC contacts 17 is thus arranged opposite a separate ECU contact 22 respectively. The opposing contacts 17 and 22 are electrically interconnected. This is effected by means of conductor rails 24, 25, 26, 27, 28, which are routed within the housing 7. In the interests of clearer identification of the conductor rails 24, 25, 26, 27, 28, and the circuit connection thereof, the constituent plastic of the housing 7 is omitted from Fig. 8. The conductor rails 25 to 28 have contact points which are exposed, i.e. are not covered by the plastic of the housing 7. Such a contact point on each of the printed conductors 24 to 28 is arranged within the recess 12. Four out of the total of five contact points are thus arranged in the recess 12, such that electrical connection of four EMC contacts 17 with the associated ECU contacts 22 can be executed by means thereof. According to Fig. 6, the corresponding contacts 17, 22 are arranged on the associated contact point of the respective conductor rail 24, 25, 26, 28. The respective electrical connection can then be formed at this point by means of a soldered joint or a welded joint.

The first conductor rail 24 is routed to a first terminal point 29 on the brush-holder 5 and permits the transmission of a phase signal, or the "W-terminal". The phase signal is outwardly-routed, if the machine 1 is a generator. Conversely, if the machine 1 is an electric motor, the phase signal is sourced from the exterior. This first conductor rail 24 is connected to the ECU component 21 and to the EMC circuit 14 via the corresponding contacts 17, 22.

The second conductor rail 25 is routed to a second terminal point 30 on the brush-holder 5 which functions, for example, as a lighting terminal, or "L terminal". The second conductor rail 25 is also connected to the ECU component 21 and to the EMC circuit 14 via the corresponding contacts 17, 22.

The third conductor rail 26 is routed to a third terminal point 31 on the brush-holder 5, which customarily serves as the earth or ground connection, or the "E terminal" or "Gnd terminal". The third conductor rail 26 is also electrically connected, via a corresponding contact point 32, with the one brush 9 - in Fig. 8, the upper brush 9. Moreover, the third conductor rail 26 is also connected to the ECU component 21 and to the EMC circuit 14 via the corresponding contacts 17, 22. Additionally, the third conductor rail 26 also can be connected to a RFI component 44, which will be discussed more detailed below, via a corresponding contact point 48.

The fourth conductor rail 27 is also provided with a contact point 33, by means of which it is electrically connected to the other brush 9 - in Fig. 8, the lower brush 9. The fourth conductor rail 27 thus connects the other or lower brush 9 to the ECU component 21 via the corresponding ECU contact 22.

The fifth conductor rail 28 forms a fourth terminal point 34 on the brush-holder 5, via which electric power can be tapped or infed, depending upon whether the machine 1 is configured or operated as a generator or as an electric motor. The fourth terminal point 34 thus serves for the supply of power or the infeed of power, and can also be designated as the "B terminal", or "B+ terminal" respectively. The fifth conductor rail 28 is connected to the ECU component 21 via the corresponding ECU contact 22. Additionally, the fifth conductor rail 28 also can be connected to aforementioned RFI component 44 via a corresponding contact point 49.

In Fig. 8, pre-tensioning springs 35 can also be seen, by means of which a contact piece 36 of the respective brush 9 within the brush support 8 is pressed outwards, i.e. against the respective slip ring 10.

The ECU component 21 can appropriately be configured in the form of a multi-leaded power package such that it incorporates a metal plate 37, facing towards the viewer in Figs. 4 and 6, and a plastic body 38, facing away from the viewer in Figs. 4 and 6, and which is covered by the metal plate 37. The ECU contacts 22 project from this plastic body 38. The interior of the plastic body 38 accommodates at least one IC, which constitutes the actual ECU, whereby IC stands for "Integrated Circuit". The metal plate 37 is solidly bonded to the plastic body 38, and generally projects over the plastic body 38, on a side facing away from the ECU contacts 22. According to Fig. 3, the recess 12 is provided with a shoulder 39 in the ECU region 23, on which the section of the metal plate 37 which projects above the plastic body 38 bears, when the ECU component 21 is fitted into the ECU region 23. In the section which projects above the plastic body 38, the metal plate 37 is appropriately provided with a through-opening 40 which can be used, e.g. for the attachment of the ECU component 21 to the housing 7.

In the examples shown here, the recess 12 is closable by means of a cover 41, as represented in Figs. 1, 2 and 7. Appropriately, this cover 41 is configured as a heat sink 42, and is thus appropriately constructed of metal, and is arranged or shaped for planar contact with the metal plate 37, when it is secured to the housing 7 for the closure of the recess 12. The cover 41 or the heat sink 42 is appropriately secured to the housing 7 by means of a screw 43, and is specifically braced by means of the metal plate 37.

Appropriately, the recess 12 is only open on the installation side 11, such that the recess 12 does not constitute a penetrative through-opening in the housing 7.

In the examples shown here, the brush-holder 5 is moreover equipped with aforementioned RFI component 44, which reduces radio frequency interference. For the integration of the RFI component 44, two variants are envisaged, namely, a first variant according to Figs. 1 to 4, and a second variant according to Figs. 6 to 8.

In the first variant according to Figs. 1 to 4, the RFI component 44 constitutes a third unit 13, which is inserted into the recess 12 from the installation side 11. To this end, a RFI region 45 is configured in the recess 12, into which the RFI component 44 can be positively inserted. When the cover 41 is fitted, the RFI component 44 is thus also covered.

In the second variant according to Figs. 6 to 8, the RFI component 44 is arranged on the housing 7 or installed therein, independently from or externally to the recess 12. To this end, in principle, a component support can be configured for the RFI component 44 which, for example, can be accessed from an opposing side of the housing 7 facing way from the installation side 11. So in principal the RFI component 44 can be welded or brazed to the respective contact point 48, 49 from said opposing side of the housing 7. It is likewise conceivable for the RFI component 44 to be embedded in the plastic moulding of the housing 7, in common with the conductor rails 24 to 28. Appropriately, the conductor rails 24 to 28 can constitute a conductor frame 46, which is enclosed in the plastic moulding of the housing 7, wherein the aforementioned contact points 29, 30, 31, 32, 33, 34, 48 and 49 remain exposed as mentioned. The RFI component 44 can be incorporated into this conductor frame 26 in an appropriate manner.

Regardless of the actual integration of the RFI component 44 in the brush-holder 5, the RFI component 44 is electrically bonded to the third conductor rail 26 via contact point 48 and to the fifth conductor rail 28 via contact point 49, such that the RFI component 44 is connected via these printed conductors 26, 28 to the ECU component 21 and to the EMC circuit 14.

A method for manufacturing the aforementioned brush-holder 5 comprises the following steps:
The prefabricated housing 7 is inserted into an assembly station, which is not represented here, such that the installation side 11 is appropriately facing upwards. The units 13, specifically the EMC circuit 14 and the ECU component 21 and, in the first variant represented in Figs. 1 to 4, additionally the RFI component 44, can then be inserted into the recess 12 from the installation side 11. Thereafter, the requisite electrical connections can be formed, for example by soldering, preferably by welding, specifically by contact and/or resistance welding, likewise from the installation side 11. The cover 41 can then be fitted to the housing 7 for the closure of the recess 12. The housing 7 can then be removed from the assembly station.

Fig. 6 shows a cap 47, which is secured to the housing 7 for the coverage of the contact points 32, 33 of the third and fourth conductor rails 26, 27. The electrical connections to the brushes 9 formed at these locations are protected accordingly. The cap 47 can be clipped onto the housing 7. Additionally, the aforementioned electrical connections between the brushes 9 and the contact points 32, 33 can be sealed by means of a hard-setting plastic such as, for example, an acrylic compound or a silicone compound. Appropriately, the cap 47 is applied to the housing 7 before this plastic compound has cured or set, such that the hard-setting plastic simultaneously serves as an adhesive for the bonding of the cap 27 to the housing 7.

## Claims

1. Brush-holder for an electric machine (1) such as, for example, an electric motor and/or a generator,
- with a housing (7), having a brush support (8) for supporting of at least one brush (9) for electrically contacting of rotor windings (6) of the machine (1),
- wherein the housing (7) is provided, on an installation side (11), with a recess (12) for the accommodation of electric and/or electronic units (13),
- wherein these units (13) are inserted into the recess (12) from the installation side (11), such that they can be electrically bonded from the installation side (11),
- wherein a first such unit (13) is formed by an EMC circuit (14) for the improvement of electromagnetic compatibility, having a printed circuit board (15), on which at least one EMC unit (16) is arranged, and having a plurality of mutually parallel and adjacently arranged EMC contacts (17),
- wherein the recess (12) has an EMC region (20) for the fitting of the printed circuit board (15),
- wherein a second such unit (13) is constituted by an ECU component (21) for the control of the machine (1), having a plurality of electrical ECU contacts (22) in a mutually parallel and adjoining arrangement,
- wherein at least one of the ECU contacts (22) is electrically connected to one of the EMC contacts (17),
- wherein the recess (12) has an ECU region (23) for the fitting of the ECU component (21),
- wherein conductor rails (24, 25, 26, 27, 28) form a conductor frame (46),
- wherein contact points of the conductor rails (24, 25, 26, 27, 28) are exposed at least in the brush support (8) and in the recess (12),
**characterized in that**
- the housing (7) is formed by plastic moulding,
- the conductor frame (46) is enclosed in the plastic moulding of the housing (7),
- said contact points of the conductor rails (24, 25, 26, 27, 28) are not covered by the plastic in the brush support (8) and in the recess (12),
- the EMC contacts (17) form an EMC contact rank on the printed circuit board (15), in which all the EMC contacts (17) are configured in a mutually parallel and adjoining arrangement,
- the ECU contacts (22) form an ECU contact rank on the ECU component (21), in which all the ECU contacts (22) are configured in a mutually parallel and adjoining arrangement,
- the EMC contact rank and the ECU contact rank are arranged in opposition on a common plane, such that the EMC contacts (17) run parallel to the ECU contacts (22),
- all the EMC contacts (17) are arranged in axial alignment opposite one of the ECU contacts (22) respectively, and
- in the EMC region (20) each EMC contact (17) and the respective opposite ECU contact (22) are electrically connected to the respective conductor rail (24, 25, 26, 28) by means of soldered or welded joints, such that said conductor rail (24, 25, 26, 28) is electrically connected to said EMC contact (17) and to said ECU contact (22).

2. Brush-holder according to Claim 1,
**characterized in that**
- the printed circuit board (15) is formed of a ceramic substrate (18), preferably of an aluminium-based material,
- printed conductors (19) for the electrical bonding of the EMC contacts (17) and the respective EMC unit (16) are printed onto the substrate (18), specifically by means of thick film printing,
- the respective EMC unit (16) is configured as a SMD component, and is electrically bonded directly to the respective printed conductor (19).

3. Brush-holder according to Claim 1 or 2,
**characterized in that**
- conductor rails (26, 27) are configured in the housing (7), which are routed from the brush support (8) to the ECU region (23),
- at least one of the ECU contacts (22) is connected to one such conductor rail (26, 27) which is routed to the brush support (8).

4. Brush-holder according to one of Claims 1 to 3,
**characterized in that**
the ECU component (21) is provided with a plastic body (38), from which extend the ECU contacts (22), and with a metal plate (37) which is solidly bonded to the plastic body (38) and which projects above the plastic body (38) on a side facing away from the ECU contacts (22), where it bears on a shoulder (39) which is configured in the ECU region (23).

5. Brush-holder according to Claim 4,
**characterized in that**
a heat sink (42) is arranged on the housing (7), such that it is extensively in contact with the metal plate (37).

6. Brush-holder according to one of Claims 1 to 5,
**characterized in that**
the recess (12) is enclosed by a cover (41), which is fitted to the installation side (11).

7. Brush-holder according to one of Claims 1 to 6,
**characterized in that**
the recess (12) is enclosed by a metal cover (41), which is fitted to the installation side (11) and is extensively in contact with the metal plate (37).

8. Brush-holder according to one of Claims 1 to 7,
**characterized in that**
the recess (12) is closed on a side of the housing (7) facing away from the installation side (11).

9. Electric machine, for example an electric motor and/or a generator,
- with a stator (2),
- with a rotor (3),
- with a brush-holder (5) according to one of the preceding claims secured to the stator (2), for electrically contacting of rotor windings (6) of the rotor (3).

10. Method for manufacturing a brush-holder (5) according to one of Claims 1 to 8, comprising the following steps:
- Insertion of the housing (7) into an assembly station, such that the installation side (11) is facing upwards,
- Insertion of the electric and/or electronic units (13) into the recess (12), from the installation side (11),
- Formation of the electrical connections, by soldering or welding, from the installation side (11),
- Closure of the recess (12) by means of the cover (41),
- Removal of the housing (7) from the assembly station.

## Patentansprüche

1. Bürstenhalter für eine elektrische Maschine (1), wie zum Beispiel ein Elektromotor und/oder ein Generator,
- mit einem Gehäuse (7), das eine Bürstenaufnahme (8) zur Aufnahme wenigstens einer Bürste (9) zur Kommutierung von Ankerwicklungen (6) der Maschine (1) aufweist,
- wobei das Gehäuse (7) an einer Montageseite (11) eine Vertiefung (12) zur Aufnahme elektrischer und/oder elektronischer Komponenten (13) aufweist,
- wobei diese Komponenten (13) von der Montageseite (11) her in die Vertiefung (12) so eingesetzt sind, dass sie von der Montageseite (11) her elektrisch anschließbar sind,
- wobei eine erste solche Komponente (13) durch einen EMC-Kreis (14) zur Verbesserung der elektromagnetischen Verträglichkeit gebildet ist, der eine Platine (15) aufweist, auf der zumindest eine EMC-Komponente (16) angeordnet ist und die mehrere, parallel zueinander und nebeneinander angeordnete EMC-Kontakte (17) aufweist,
- wobei die Vertiefung (12) einen EMC-Bereich (20) zum Einsetzen der Platine (15) aufweist,
- wobei eine zweite solche Komponente (13) durch ein ECU-Bauteil (21) zur Steuerung der Maschine (1) gebildet ist, das mehrere elektrische ECU-Kontakte (22) aufweist, die parallel zueinander und nebeneinander angeordnet sind,
- wobei wenigstens einer der ECU-Kontakte (22) mit einem der EMC-Kontakte (17) elektrisch verbunden ist,
- wobei die Vertiefung (12) einen ECU-Bereich (23) zum Einsetzen des ECU-Bauteils (21) aufweist,
- wobei Leiterbahnen (24, 25, 26, 27, 28) einen Leiterrahmen (46) bilden,
- wobei Kontaktstellen der Leiterbahnen (24, 25, 26, 27, 28) zumindest in der Bürstenaufnahme (8) und in der Vertiefung (12) freiliegen,
**dadurch gekennzeichnet,**
- **dass** das Gehäuse (7) durch Kunststoff-Gussteil gebildet ist,
- **dass** der Leiterrahmen (46)vom Kunststoff-Gussteil des Gehäuses (7) umschlossen ist,
- **dass** besagte Kontaktstellen der Leiterbahnen (24, 25, 26, 27, 28) in der Bürstenaufnahme (8) und in der Vertiefung (12)nicht vom Kunststoff bedeckt sind,
- **dass** die EMC-Kontakte (17) auf der Platine (15) eine EMC-Kontaktreihe bilden, in der alle EMC-Kontakte (17) parallel zueinander und nebeneinander angeordnet sind,
- **dass** die ECU-Kontakte (22) auf dem ECU-Bauteil (21) eine ECU-Kontaktreihe bilden, in der alle ECU-Kontakte (22) parallel zueinander und nebeneinander angeordnet sind,
- **dass** die EMC-Kontaktreihe und die ECU-Kontaktreihe liegen sich in einer gemeinsamen Ebene gegenüber, so dass die EMC-Kontakte (17) parallel zu den ECU-Kontakten (22) verlaufen,
- **dass** alle EMC-Kontakte (17) jeweils einem der ECU-Kontakte (22) gegenüberliegen und dazu axial ausgerichtet sind, und
- **dass** im EMC-Bereich (20) jeder EMC-Kontakt (17) und der jeweilige gegenüberliegende ECU-Kontakt (22) mit der jeweiligen Leiterbahn (24, 25, 26, 28) durch gelötete oder geschweißte Verbindungen elektrisch angeschlossen sind, so dass besagte Leiterbahn (24, 25, 26, 28) an besagten EMC-Kontakt (17) und an besagtem ECU-Kontakt (22) elektrisch angeschlossen ist.

2. Bürstenhalter nach Anspruch 1,
**dadurch gekennzeichnet,**
- **dass** die Platine (15) aus einem keramischen Substrat (18), vorzugsweise auf Aluminiumbasis, gebildet ist,
- **dass** Leiterbahnen (19) zur elektrischen Verbindung der EMC-Kontakte (17) und der jeweiligen EMC-Komponente (16), insbesondere mittels Dickschichttechnik, auf das Substrat (18) aufgedruckt sind,
- **dass** die jeweilige EMC-Komponente (16) als SMD-Bauteil ausgestaltet ist und direkt an die jeweilige Leiterbahn (19) elektrisch angeschlossen ist.

3. Bürstenhalter nach Anspruch 1 oder 2,
**dadurch gekennzeichnet,**
- **dass** im Gehäuse (7) Leiterbahnen (26, 27) ausgebildet sind, die von der Bürstenaufnahme (8) zum ECU-Bereich (23) führen,
- **dass** wenigstens einer der ECU-Kontakte (22) an eine solche zur Bürstenaufnahme (8) führende Leiterbahn (26, 27) angeschlossen ist.

4. Bürstenhalter nach einem der Ansprüche 1 bis 3,
**dadurch gekennzeichnet,**
**dass** das ECU-Bauteil (21) einen Kunststoffkörper (38), von dem die ECU-Kontakte (22) ausgehen, und eine fest mit dem Kunststoffkörper (38) verbundene Metallplatte (37) aufweist, die an einer von den ECU-Kontakten (22) abgewandten Seite über den Kunststoffkörper (38) übersteht und dort auf einem im ECU-Bereich (23) ausgebildeten Absatz (39) aufliegt.

5. Bürstenhalter nach Anspruch 4,
**dadurch gekennzeichnet,**
**dass** am Gehäuse (7) eine Wärmesenke (42) so angeordnet ist, dass sie die Metallplatte (37) großflächig berührt.

6. Bürstenhalter nach einem der Ansprüche 1 bis 5,
**dadurch gekennzeichnet,**
**dass** die Vertiefung (12) mit einem an der Montageseite (11) angebrachten Deckel (41) verschlossen ist.

7. Bürstenhalter nach einem der Ansprüche 1 bis 6,
**dadurch gekennzeichnet,**
**dass** die Vertiefung (12) mit einem an der Montageseite (11) angebrachten Deckel (41) aus Metall verschlossen ist, der die Metallplatte (37) großflächig berührt.

8. Bürstenhalter nach einem der Ansprüche 1 bis 7,
**dadurch gekennzeichnet,**
**dass** die Vertiefung (12) zu einer von der Montageseite (11) abgewandten Seite des Gehäuses (7) hin geschlossen ist.

9. Elektrische Maschine, die zum Beispiel ein Elektromotor und/oder ein Generator,
- mit einem Stator (2),
- mit einem Rotor (3),
- mit einem am Stator (2) befestigten Bürstenhalter (5) nach einem der vorhergehenden Ansprüche zum Kommutieren von Ankerwicklungen (6) des Rotors (3).

10. Verfahren zum Herstellen eines Bürstenhalters (5) nach einem der Ansprüche 1 bis 8, mit folgenden Schritten:
- Einsetzen des Gehäuses (7) in eine Montagestation, so dass die Montageseite (11) nach oben weist,
- Einsetzen der elektrischen und/oder elektronischen Komponenten (13) in die Vertiefung (12) von der Montageseite (11) her,
- Erzeugen der elektrischen Anschlüsse durch Löten oder Schweißen von der Montageseite (11) her,
- Verschließen der Vertiefung (12) mit dem Deckel (41),
- Entnehmen des Gehäuses (7) aus der Montagestation.

## Revendications

1. Porte-balai pour une machine électrique (1) telle que, par exemple, un moteur électrique et/ou un générateur,
- avec un boîtier (7), présentant un support de balai (8) pour soutenir au moins un balai (9) pour entrer en contact électriquement avec des enroulements de rotor (6) de la machine (1),
- dans lequel le boîtier (7) est pourvu, sur un côté d'installation (11), d'un évidement (12) pour le logement d'unités électriques et/ou électroniques (13),
- dans lequel ces unités (13) sont insérées dans l'évidement (12) depuis le côté d'installation (11), de sorte qu'elles peuvent être électriquement liées depuis le côté d'installation (11),
- dans lequel une telle première unité (13) est formée par un circuit EMC (14) pour l'amélioration de la compatibilité électromagnétique, présentant une carte de circuit imprimé (15), sur laquelle au moins une unité EMC (16) est agencée, et présentant une pluralité de contacts EMC agencés mutuellement de manière parallèle et adjacente (17),
- dans lequel l'évidement (12) présente une région EMC (20) pour l'ajustement de la carte de circuit imprimé (15),
- dans lequel une telle seconde unité (13) est constituée par un composant ECU (21) pour la commande de la machine (1), présentant une pluralité de contacts ECU électriques (22) dans un agencement mutuellement parallèle et adjacent,
- dans lequel au moins un des contacts ECU (22) est électriquement raccordé à un des contacts EMC (17),
- dans lequel l'évidement (12) présente une région ECU (23) pour l'ajustement du composant ECU (21),
- dans lequel des rails conducteurs (24, 25, 26, 27, 28) forment un cadre conducteur (46),
- dans lequel des points de contact des rails conducteurs (24, 25, 26, 27, 28) sont exposés au moins dans le support de balai (8) et dans l'évidement (12),
**caractérisé en ce que**
- le boîtier (7) est formé par moulage plastique,
- le cadre conducteur (46) est enfermé dans le moulage plastique du boîtier (7),
- lesdits points de contact des rails conducteurs (24, 25, 26, 27, 28) ne sont pas recouverts par le plastique dans le support de balai (8) et dans l'évidement (12),
- les contacts EMC (17) forment une rangée de contacts EMC sur la carte de circuit imprimé (15), dans laquelle tous les contacts EMC (17) sont configurés dans un agencement mutuellement parallèle et adjacent,
- les contacts ECU (22) forment une rangée de contacts ECU sur le composant ECU (21), dans laquelle tous les contacts ECU (22) sont configurés dans un agencement mutuellement parallèle et adjacent,
- la rangée de contacts EMC et la rangée de contacts ECU sont agencées en opposition sur un plan commun, de sorte que les contacts EMC (17) sont parallèles aux contacts ECU (22),
- tous les contacts EMC (17) sont agencés en alignement axial à l'opposé d'un des contacts ECU (22) respectivement, et
- dans la région EMC (20), chaque contact EMC (17) et le contact ECU opposé respectif (22) sont électriquement raccordés au rail conducteur respectif (24, 25, 26, 28) au moyen de joints brasés ou soudés, de sorte que ledit rail conducteur (24, 25, 26, 28) est électriquement raccordé audit contact EMC (17) et audit contact ECU (22).

2. Porte-balai selon la revendication 1,
**caractérisé en ce que**
- la carte de circuit imprimé (15) est formée d'un substrat en céramique (18), de préférence d'un matériau à base d'aluminium,
- des conducteurs imprimés (19) pour la liaison électrique des contacts EMC (17) et de l'unité EMC respective (16) sont imprimés sur le substrat (18), spécifiquement au moyen d'une impression de film épais,
- l'unité EMC respective (16) est configurée comme un composant CMS, et est électriquement liée directement au conducteur imprimé respectif (19).

3. Porte-balai selon la revendication 1 ou 2,
**caractérisé en ce que**
- des rails conducteurs (26, 27) sont configurés dans le boîtier (7), qui sont acheminés du support de balai (8) jusqu'à la région ECU (23),
- au moins un des contacts ECU (22) est raccordé à un tel rail conducteur (26, 27) qui est acheminé jusqu'au support de balai (8).

4. Porte-balai selon l'une des revendications 1 à 3,
**caractérisé en ce que**
le composant ECU (21) est pourvu d'un corps en plastique (38), duquel s'étendent les contacts ECU (22), et d'une plaque métallique (37) qui est solidement liée au corps en plastique (38) et qui fait saillie au-dessus du corps en plastique (38) sur un côté faisant face à l'opposé des contacts ECU (22), où elle s'appuie sur un épaulement (39) qui est configuré dans la région ECU (23).

5. Porte-balai selon la revendication 4,
**caractérisé en ce que**
un dissipateur thermique (42) est agencé sur le boîtier (7), de sorte qu'il est largement en contact avec la plaque métallique (37).

6. Porte-balai selon l'une des revendications 1 à 5,
**caractérisé en ce que**
l'évidement (12) est enfermé par un couvercle (41), qui est ajusté sur le côté d'installation (11).

7. Porte-balai selon l'une des revendications 1 à 6,
**caractérisé en ce que**
l'évidement (12) est enfermé par un couvercle métallique (41), qui est ajusté sur le côté d'installation (11) et est largement en contact avec la plaque métallique (37).

8. Porte-balai selon l'une des revendications 1 à 7,
**caractérisé en ce que**
l'évidement (12) est fermé sur un côté du boîtier (7) faisant face à l'opposé du côté d'installation (11).

9. Machine électrique, par exemple un moteur électrique et/ou un générateur,
- avec un stator (2),
- avec un rotor (3),
- avec un porte-balai (5) selon l'une des revendications précédentes fixé sur le stator (2), pour entrer en contact électriquement avec des enroulements de rotor (6) du rotor (3).

10. Procédé de fabrication d'un porte-balai (5) selon l'une des revendications 1 à 8, comprenant les étapes suivantes :
- l'insertion du boîtier (7) dans une station d'assemblage, de sorte que le côté d'installation (11) fait face vers le haut,
- l'insertion des unités électriques et/ou électroniques (13) dans l'évidement (12), depuis le côté d'installation (11),
- la formation des raccordements électriques, en brasant ou soudant, depuis le côté d'installation (11),
- la fermeture de l'évidement (12) au moyen du couvercle (41),
- le retrait du boîtier (7) de la station d'assemblage.
